# EUROPEAN PATENT APPLICATION

(11) **EP 1 605 467 A2**
(43) Date of publication of application: **14.12.2005**
(21) Application number: 05104219.0
(22) Date of filing: 18.05.2005
(51) Int. Cl.: G11B 27/10

(54) **Information playback apparatus and information playback method**

(30) Priority: 31.05.2004 JP 2004162086
(71) Applicant: KABUSHIKI KAISHA TOSHIBA, Tokyo 105-8001 (JP)
(72) Inventor: Shimomura, Kazuyoshi Toshiba Corporation, Minato-ku Tokyo 105-8001 (JP)
(74) Representative: Henkel, Feiler & Hänzel

(57) **Abstract**

An information playback apparatus includes a reading unit (2) which reads data from an information storage medium on which video data is recorded, first audio data synchronized with the video data, second audio data not synchronized with the video data, first playback information which defines a playback order of a predetermined unit data included in the video data, and second playback information for playing back the second audio data in correspondence with sequential playback of the predetermined unit data defined by the first playback information, and an audio data playback unit (3,4,10,11,12,14) which selects any one of a first playback process for playing back the first audio data and a second playback process for playing back the second audio data based on the second playback information.

## Description

The present invention relates to an information playback apparatus and information playback method for playing back an optical disk such as a DVD.

In recent years, DVDs with various standards have prevailed. For example, in accordance with the DVD video standard, one complete content is recorded on a disk for each unit called a title. This title is made up of one or more program chains (PGCs). The PGC is a logical unit for playing back an entire or partial title or menu. The PGC includes PGC information (PGCI) which describes a list designating cells in a playback order, and one or more cells which are to be played back. The cell serves as a basic unit of the content. One cell can be used in the different PGCs.

Also, as stream data included in the title, a video object (VOB) is defined. The VOB is made up of data with pack structures, i.e., data of a navigation pack, video pack, audio pack, sub-picture pack, and graphic pack. In the navigation pack, playback control information is recorded. In the video pack, video data is recorded. In the audio pack, audio data is recorded. In the sub-picture pack, sub-picture data is recorded. In the graphic pack, graphic data is recorded. The video data, audio data, sab-picture data, and graphic data are played back in synchronism with each other in accordance with time information recorded in the navigation pack.

With this arrangement, for example, audio data cannot be output by the VOB while searching on a menu screen (during menu transition). As a result, a silent state arises while searching on the menu screen (during menu transition).

In contrast with this, Jpn. Pat. Appln. KOKAI Publication No. 2001-52467 discloses a technique for playing back a spotlight period corresponding to the characteristic part of a tune in the menu automatically created by a player.

However, the audio data playback process disclosed in the above reference poses some problems resulting in inconvenience on the user side. For example, even when the user wants or does not want to play back the audio data during transition on the menu screen, he or she cannot select playback of the audio data. Alternatively, even when the user wants to play back audio data other than that which has been listened to, he or she cannot select playback of the desired audio data. The user can know neither the amount of audio data serving as a playback target, nor the position of current playback audio data in the playback target audio data.

It is an object of the present invention to provide an information playback apparatus and information playback method in which various audio playback processes can be performed in accordance with a user's request.

In the present invention, for example, an information playback apparatus comprises a reading unit configured to read data from an information storage medium on which video data is recorded, first audio data synchronized with the video data, second audio data not synchronized with the video data, first playback information which defines a playback order of predetermined unit data included in the video data, and second playback information for playing back the second audio data in correspondence with sequential playback of the predetermined unit data defined by the first playback information, a video data playback unit configured to play back the video data based on the first playback information, and an audio data playback unit configured to select any one of a first playback process for playing back the first audio data in synchronism with playback of the video data, and a second playback process for playing back the second audio data based on the second playback information, and play back any one of the audio data.

In the present invention, for example, an information playback method comprises reading data from an information storage medium on which video data is recorded, first audio data synchronized with the video data, second audio data not synchronized with the video data, first playback information which defines a playback order of predetermined unit data included in the video data, and second playback information for playing back the second audio data in correspondence with sequential playback of the predetermined unit data defined by the first playback information, playing back the video data based on the first playback information, and selecting any one of a first playback process for playing back the first audio data in synchronism with playback of the video data, and a second playback process for playing back the second audio data based on the second playback information, and playing back any one of the audio data.

This summary of the invention does not necessarily describe all necessary features so that the invention may also be a sub-combination of these described features.

The invention can be more fully understood from the following detailed description when taken in conjunction with the accompanying drawings, in which:
FIG. 1 is a block diagram showing a schematic arrangement of an information playback apparatus according to an embodiment of the present invention;
FIG. 2 is a table showing an example of EAOB management information recorded on an optical disk;
FIG. 3 is a table showing an example of EAOB entry point information recorded on the optical disk;
FIG. 4 is a table showing an example of EAOB playback information recorded on the optical disk;
FIG. 5 is a view showing an example of an EVOB data structure;
FIG. 6 is a view showing an example of an EAOB data structure, and an example of an EAOB playback process;
FIG. 7 is a flowchart showing an example of an entry point acquisition process as the first step of the EAOB playback process;
FIG. 8 is a flowchart showing an example of an EAOB playback propriety decision process and an EAOB playback period decision process, as the second step of the EAOB playback process;
FIG. 9 is a flowchart showing an example of a Part count display process and a current playback Part number display process, as the third step of the EAOB playback process;
FIG. 10 is a flowchart showing an example of the Part count calculation process in a playback period;
FIG. 11 is a flowchart showing an example of a playback Part number search process corresponding to a playback Part number change request from a user;
FIG. 12 is a view showing a display example of information about playback of the EAOB, on a panel display unit;
FIG. 13 is a view for explaining an example of an effect obtained by adding the EAOB (second audio data) in addition to the audio data (first audio data) contained in the EVOB; and
FIG. 14 is a flowchart showing an example of a playback selection process for selecting whether the playback process is executed based on the EAOB.

An embodiment of the present invention will be described below with reference to the accompanying drawing.

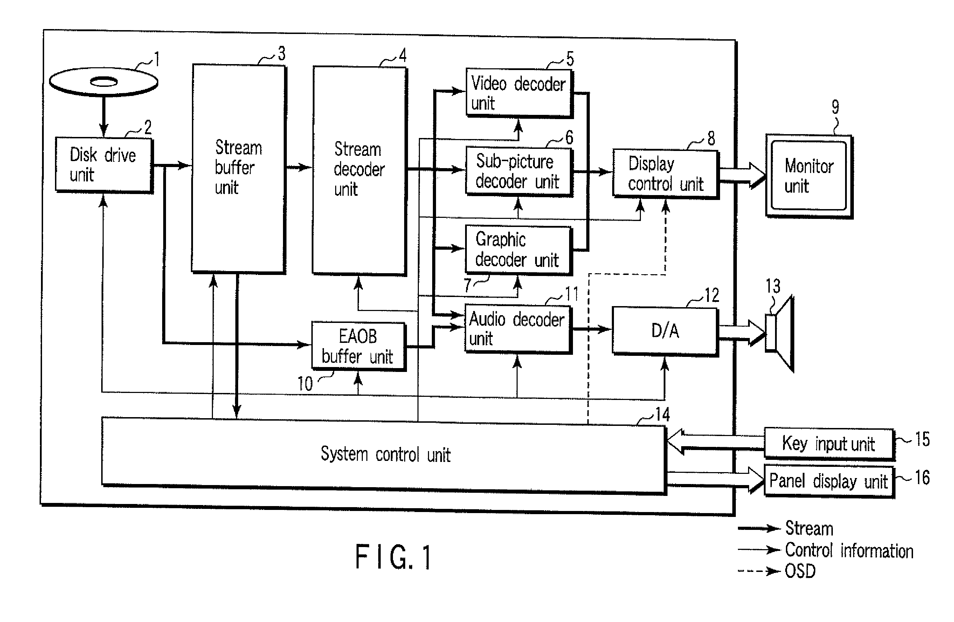

FIG. 1 is a block diagram showing a schematic arrangement of an information playback apparatus according to an embodiment of the present invention.

The information playback apparatus plays back an optical disk 1 serving as a recording medium. This optical disk 1 records video data, first audio data played back in synchronism with the video data, and second audio data which can be played back in asynchronism with the video data. This optical disk 1 also records a PGC containing PGC information (PGCI) which defines the playback order of predetermined unit data (cells) included in the video data, and elementary audio object (EAOB) playback information for playing back the second audio data in correspondence with sequential playback of the predetermined unit data defined by the PGC information.

Complementarily, the EAOB playback information is information assigned for each PGC. The PGC is a logical unit for playing back an entire or partial title or menu. The PGC is made up of the PGC information (PGCI) which describes the playback order and entity of the predetermined unit data (cells), and the predetermined unit data to be played back.

Each of the video data and the first audio data played back in synchronism with the video data includes an enhanced video object (EVOB). The second audio data which can be played back in asynchronism with this video data includes the EAOB.

The EVOB is an object made up of a plurality of data such as navigation data, video data, audio data (first audio data), sub-picture data, and graphic data. Alternatively, the EAOB is an object including only the audio data (second audio data).

The information playback apparatus includes a disk drive unit 2, stream buffer unit 3, stream decoder unit 4, video decoder unit 5, sub-picture decoder unit 6, graphic decoder unit 7, display control unit 8, monitor unit 9, EAOB buffer unit 10, audio decoder unit 11, digital-to-analog conversion unit 12, loudspeaker unit 13, system control unit 14, key input unit 15, and panel display unit 16.

The disk drive unit 2 rotatably drives the optical disk 1, reads out the recorded data on the optical disk 1, demodulates the readout signal, and corrects the error of the demodulated data. The stream buffer unit 3 buffers the data output from the disk drive unit 2. The stream decoder unit 4 divides the stream data buffered by the stream buffer unit 3 into a video pack including the video data, a sub-picture pack including the sub-picture data, a graphic pack including the graphic data, and an audio pack including the audio data (first audio data). The stream decoder unit 4 then transfers the above data to the video decoder unit 5, sub-picture decoder unit 6, graphic decoder unit 7, and audio decoder unit 11, respectively, in accordance with ID data which are recorded in the respective data, and represent transfer times and data types.

The video decoder unit 5 decodes the video data transferred from the stream decoder unit 4, and transfers the decoded data to the display control unit 8. The sub-picture decoder unit 6 decodes the sub-picture data transferred from the stream decoder unit 4, and transfers the decoded data to the display control unit 8. The graphic decoder unit 7 decodes the graphic data transferred from the stream decoder unit 4, and transfers the decoded data to the display control unit 8.

The display control unit 8 converts digital signals respectively output from the video decoder unit 5, sub-picture decoder unit 6, and graphic decoder unit 7 into analog signals, and multiplexes the analog signals. The display control unit 8 also multiplexes on-screen data (OSD) set by the system control unit 14, and the data from respective decoder units. The monitor unit 9 guides a user to various pieces of information by playing back, as an image, the data output from the display control unit 8.

The EAOB buffer unit 10 buffers EAOB data output from the disk drive unit 2. The audio decoder unit 11 decodes any one of EVOB audio data (first audio data) transferred from the stream decoder unit 4, and EAOB data (second audio data) buffered in the EAOB buffer unit 10. The EAOB buffer unit 10 then transfers the decoded data to the digital-to-analog conversion unit 12. The system control unit 14 determines which of the EVOB audio data (first audio data) and the EAOB data (second audio data) is to be decoded. The digital-to-analog conversion unit 12 converts the digital signal output from the audio decoder unit 11 into the analog signal. The loudspeaker unit 13 plays back, as audio data, the data output from the digital-to-analog conversion unit 12.

The system control unit 14 controls the disk drive unit 2, stream buffer unit 3, stream decoder unit 4, video decoder unit 5, sub-picture decoder unit 6, graphic decoder unit 7, display control unit 8, EAOB buffer unit 10, audio decoder unit 11, and digital-to-analog conversion unit 12, and performs a playback process corresponding to a user's operation.

The key input unit 15 receives a designation request from the user. The panel display unit 16 displays disk information and playback information.

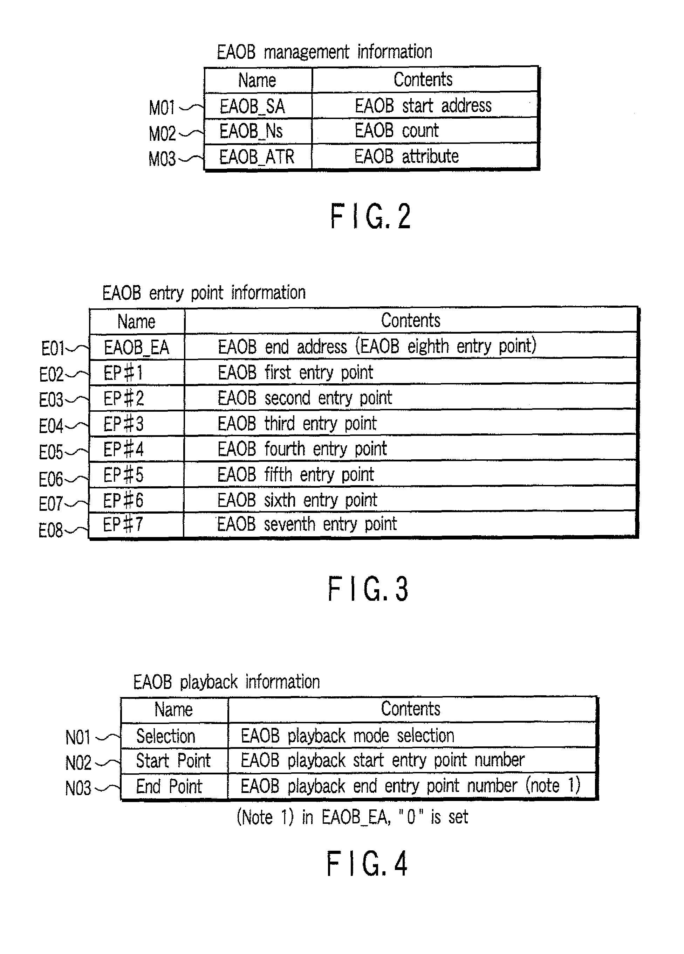

FIG. 2 is a table showing an example of EAOB management information recorded on the optical disk 1.

In EAOB_SA (M01), an EAOB start address is recorded. In EAOB_Ns (M02), an EAOB count in the optical disk 1 is recorded. When the EAOB is absent in the optical disk, "0" is recorded in EAOB_Ns (M02). In EAOB_ATR (M03), an EAOB attribute such as a channel count is recorded.

FIG. 3 is a table showing an example of EAOB entry point information recorded on the optical disk 1.

The EAOB can include at most seven entry points. In EAOB_EA (E01), an EAOB end address is recorded.

In EP#1 (E02), the first EAOB entry point is recorded.

In EP#2 (E03), the second EAOB entry point is recorded. When the second entry point is absent, "0" is recorded in EP#2 (E03).

In EP#3 (E04), the third EAOB entry point is recorded. When the third entry point is absent, "0" is recorded in EP#3 (E04).

In EP#4 (E05), the fourth EAOB entry point is recorded. When the fourth entry point is absent, "0" is recorded in EP#4 (E05).

In EP#5 (E06), the fifth EAOB entry point is recorded. When the fifth entry point is absent, "0" is recorded in EP#5 (E06).

In EP#6 (E07), the sixth EAOB entry point is recorded. When the sixth entry point is absent, "0" is recorded in EP#6 (E07).

In EP#7 (E08), the seventh EAOB entry point is recorded. When the seventh entry point is absent, "0" is recorded in EP#7 (E08).

FIG. 4 is a table showing an example of an EAOB playback information recorded on the optical disk 1.

In Selection (N01), information (playback mode selection information) representing whether the EAOB is played back. When an EAOB playback process is not allowed, the audio data (first audio data) recorded in the EVOB is played back.

In Start Point (N02), the entry point number at the playback start is recorded. Start Point (N02) has values from 1 to 7.

In End Point (N03), the entry point number at the playback end is recorded. End Point (N03) is set to 0, or has values from 2 to 7. When End Point (N03) = 0, EAOB_EA (E01) serving as the EAOB end address is set to a playback end position.

The playback apparatus repeatedly plays back the EAOBs corresponding to the entry point numbers from the playback start to the playback end which are recorded in the EAOB playback information. The EAOB playback information can be added for each PGC.

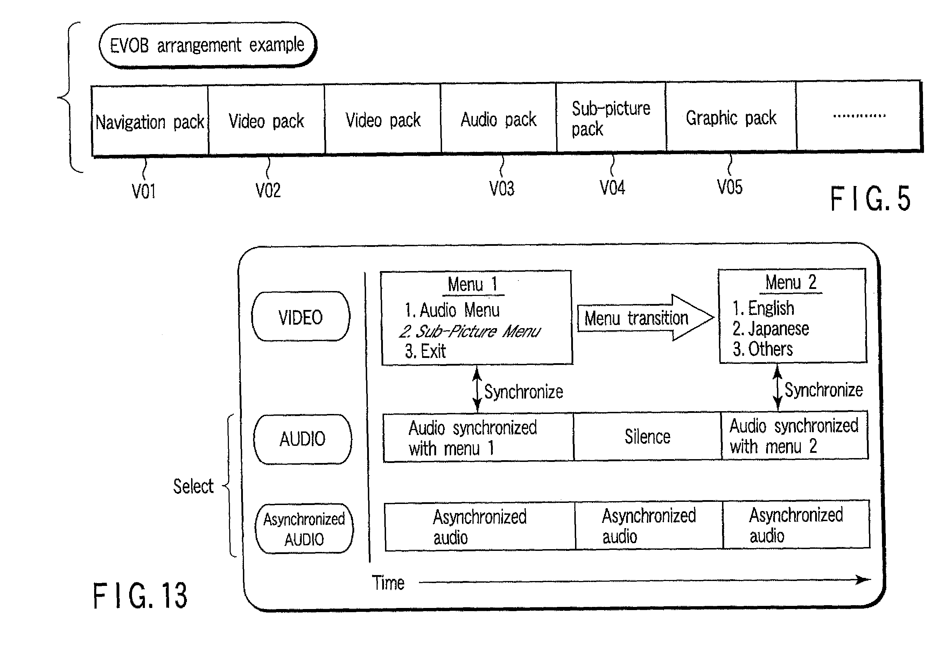

FIG. 5 is a view showing an example of an EVOB data structure.

The EVOB is made up of data with pack structures, i.e., data of a navigation pack (V01), video pack (V02), audio pack (V03), sub-picture pack (V04), and graphic pack (V05).

In the navigation pack (V01), playback control information is recorded. In the video pack (V02), video data is recorded. In the audio pack (V03), audio data (first audio data) is recorded. In the sub-picture pack (V04), sub-picture data is recorded. In the graphic pack (V05), graphic data is recorded. The video data, audio data (first audio data), sub-picture data, and graphic data are played back in synchronism with each other in accordance with time information recorded in the navigation pack (V01).

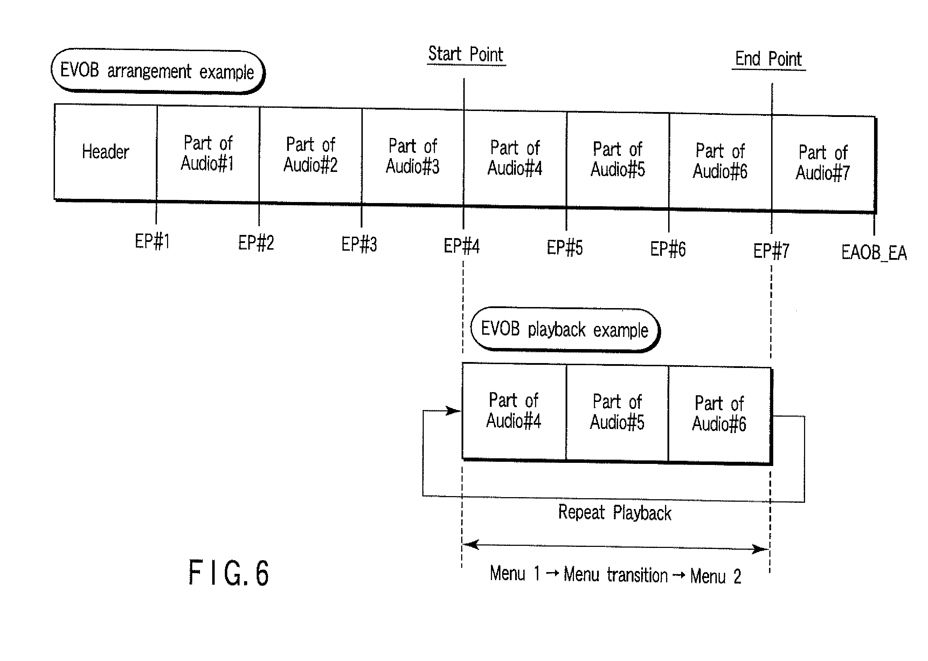

FIG. 6 is a view showing an example of an EAOB data structure, and an example of the EAOB playback process.

At the head of the EAOB, Header information is prepared, in which the entry point shown in FIG. 3 is defined. Sequentially, EAOB audio data (Part of Audio #1, #2, ...), i.e., the second audio data follows the Header information.

For example, as shown in FIG. 6, assume that the EAOB includes seven entry points, Start Point (N02) is EP#4, and End Point (N03) is EP#7. In this case, the EAOB playback process is repeated between EP#4 and EP#7 asynchronously with the video data playback process.

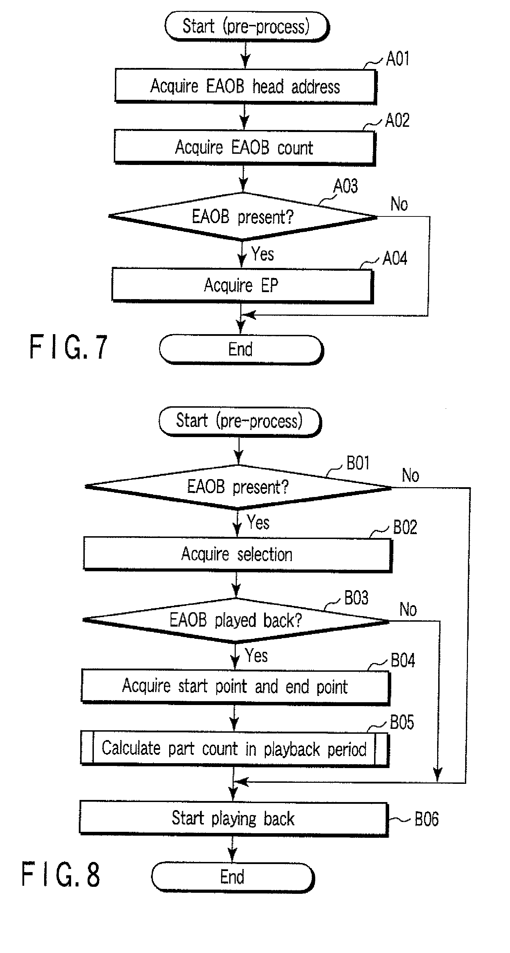

FIG. 7 is a flowchart showing an example of an entry point acquisition process as the first step of the EAOB playback process. The EAOB playback process is executed on the basis of the control by the system control unit 14.

The system control unit 14 acquires information about the EAOB readout from the optical disk 1 by the disk drive unit 2. First, the system control unit 14 acquires EAOB_SA (M01) serving as the EAOB start address (A01). EAOB_SA (M01) is recorded as a relative address with respect to a given position in the disk. The relative address is converted into an absolute address.

The system control unit 14 then acquires EAOB_Ns in order to check the presence/absence of the EAOB (A02). The system control unit 14 determines the presence of the EAOB in accordance with acquired EAOB_Ns (A03).

When it is determined that the EAOB is absent (NO in A03), the system control unit 14 ends the EAOB playback process. When it is determined that the EAOB is present (YES in A03), the system control unit 14 acquires all of the entry points (E01 to E08) (A04).

The disk includes only one EAOB. Hence, the first step may be executed only once as long as the disk is not changed.

FIG. 8 is a flowchart showing an example of an EAOB playback propriety decision process and an EAOB playback period decision process, as the second step of the EAOB playback process.

When it is determined that the EAOB is absent (NO in B01), the system control unit 14 plays back the EVOB audio data (second audio data) (B06).

When it is determined that the EAOB is present (YES in B01), the system control unit 14 acquires Selection (N01) (B02). In accordance with acquired Selection (N01), the system control unit 14 determines whether the EAOB playback is allowed (B03).

When it is determined that the EAOB playback is not allowed (NO in B03), the system control unit 14 plays back the EVOB audio data (second audio data) (B06). When it is determined that the EAOB playback is allowed (YES in B03), the system control unit 14 acquires Start Point (N02), and End Point (N03) (B04).

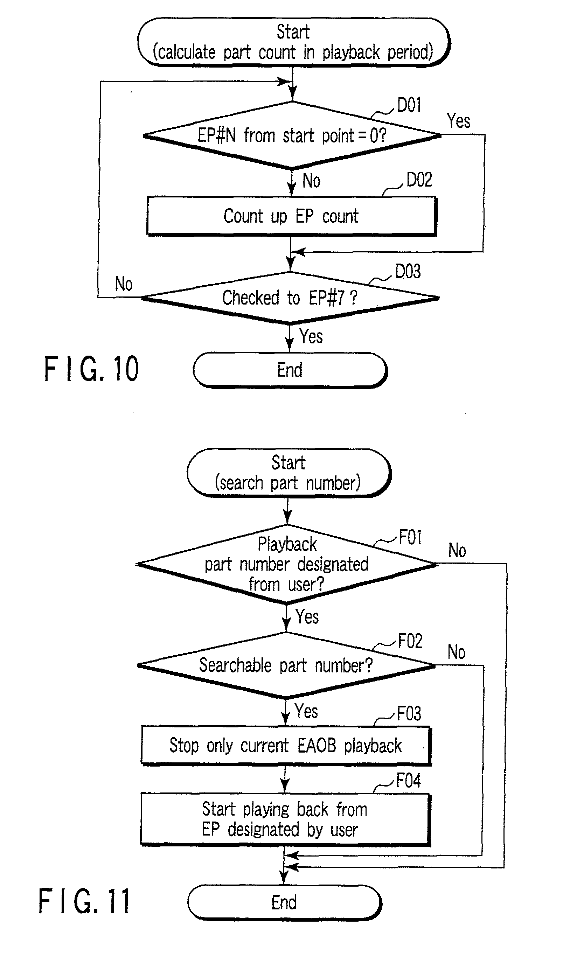

In accordance with acquired Start Point (N02) and End Point (N03), the system control unit 14 calculates a Part count in the playback period (B05), and starts playback of the EAOB and the EVOB (B06). The Part count calculation process in the playback period is shown in FIG. 10.

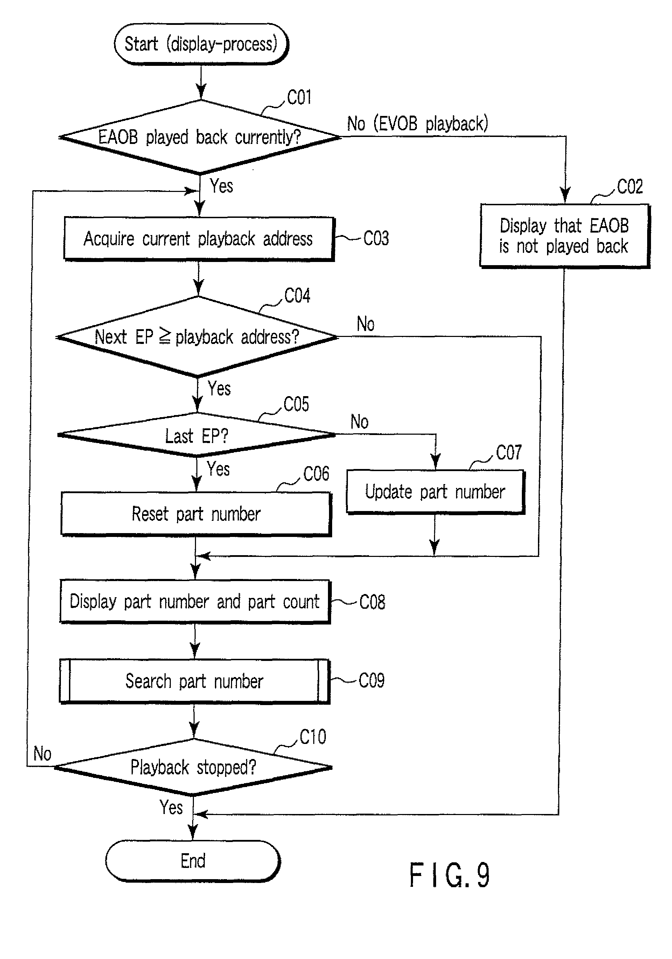

FIG. 9 is a flowchart showing an example of a Part count display process and a current playback Part number display process, as the third step of the EAOB playback process.

The system control unit 14 determines whether the EAOB is currently played back (C01). When it is determined that the EAOB is not currently played back (the EVOB is currently played back) (NO in C01), the system control unit 14 transmits the OSD to the display control unit 8, and displays and outputs information describing that the EAOB is not currently played back, to the monitor unit 9 (C02).

When it is determined that the EAOB is currently played back (YES in C01), the system control unit 14 acquires a current playback address (C03). The system control unit 14 compares the acquired current playback address with the address of the next entry point (C04).

When it is determined that the address of the next entry point is larger than the current playback address (NO in C04), the system control unit 14 displays and outputs the current Part number and the current Part count on the monitor unit 9 (C08). When it is determined that the address of the next entry point is equal to or smaller than the current playback address (YES in C04), the system control unit 14 determines whether the current playback address corresponds to the last entry point (C05).

When it is determined that the current playback address corresponds to the last entry point (YES in C05), the system control unit 14 resets the Part number in order to repeatedly play back the EAOB data (C06). With reference to FIG. 6, when the current playback address corresponds to the last entry point (EP#7), the Part number is reset. Then, the process returns to Start Point (N02) to start playback of the first Part number. When it is determined that the current playback address does not correspond to the last entry point (NO in C05), the system control unit 14 counts up the Part number (C07).

The system control unit 14 displays and outputs the reset or counted Part number and the playback target Part count on the monitor unit 9 (C08).

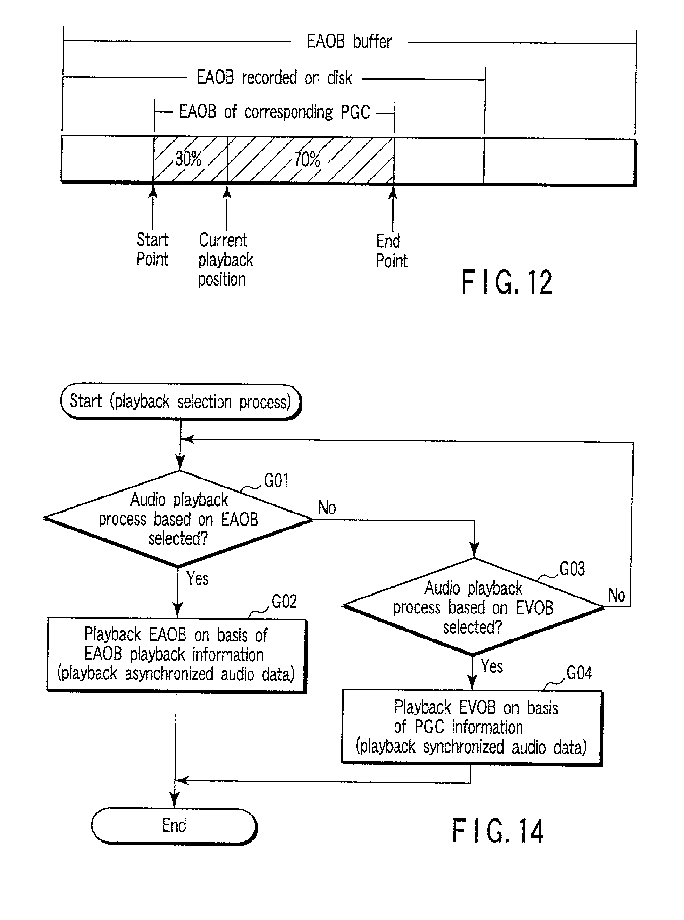

When receiving a playback Part number change request from the user via the key input unit 15, the system control unit 14 searches for the playback Part number (C09). The playback Part number search process is shown in FIG. 11.

The system control unit 14 updates (C07) or resets the Part number (C06) until playback is stopped, and repeatedly displays the Part number and the Part count (C10).

FIG. 10 is a flowchart showing an example of the Part count calculation process in the playback period.

The system control unit 14 checks the presence/absence of the entry points from Start Point (N02) to EP#7 (E08) between EP#1 (E02) and EP#7 (E08) (D01). When the entry point count is zero between Start Point (N02) and EP#7 (E08), it is determined that the playback target data is absent.

After checking the presence of the playback target data (YES in D01), the system control unit 14 counts the entry points serving as the playback targets (D02). After checking the presence of the entry point from Start Point (N02) to EP#7 (E08), the system control unit 14 ends the Part count calculation process (C03).

FIG. 11 is a flowchart showing an example of the playback Part number search process corresponding to the playback Part number change request form the user.

The system control unit 14 always checks the presence/absence of the playback Part number change request (selection input) from the user via the key input unit 15 (F01). When the playback Part number change request (selection input) is not received (NO in F01), the system control unit 14 does not execute the playback Part number search process. When the playback Part number change request (selection input) is received (YES in F01), the system control unit 14 determines whether the playback Part number (selected playback Part number) designated to change by the user is included in the current playback EAOB Part count (already acquired in the Part count calculation process shown in FIG. 10), and whether the search process can be executed (F02). That is, the system control unit 14 determines whether the designated playback Part number can be played back.

When it is determined that the designated playback Part number cannot be searched, the system control unit 14 continues to play back the current playback EAOB. When it is determined that the designated playback Part number can be searched, the system control unit 14 stops playing back only the current playback EAOB (F03), acquires the entry point (any one of E02 to E07) corresponding to the designated playback Part number, and starts playback of the designated playback Part number (acquired entry point) (F04).

As described above, in the EAOB playback process, the information playback apparatus in the present invention calculates the Part count (Part count in the playback period) serving as the playback target, and the current playback Part number, and displays these pieces of information. This allows the user to comprehend the full contents of the EAOB playback process, designate the desired Part number, and view the desired information. That is, the information playback apparatus in the present invention can provide the playback function of the Part number designated by the user which can be used in the PGC.

FIG. 12 is a view showing a display example of information about the EAOB playback on the panel display unit 16.

As shown in FIG. 12, the panel display unit 16 displays the EAOB recorded on the disk, and a plurality of audio data (Part of Audio #n, #n+1, ...) serving as the playback targets designated by Start Point and End Point. The panel display unit 16 also specifies and displays the current playback position (position of the current playback audio data) on the plurality of audio data serving as the playback targets. With this process, the current playback position (position of the current playback audio data) in the plurality of audio data can be guided and displayed. The current playback position can be calculated based on the EAOB buffer amount, and the current playback buffer position. The above display process allows the user to visually comprehend the EAOB playback position.

FIG. 13 is a view for explaining the effect obtained by adding the EAOB (second audio data) in addition to the audio data (first audio data) contained in the EVOB.

The EVOB is made up of data with pack structures, i.e., data of a navigation pack (V01), video pack (V02), audio pack (V03), sub-picture pack (V04), and graphic pack (V05). With this arrangement, for example, audio data cannot be output by the EVOB while searching on a menu screen (during menu transition). As a result, a silent state arises while searching on the menu screen (during menu transition).

Alternatively, the EAOB includes elementary audio data (second audio data). That is, the EAOB can execute the playback process asynchronously with a main picture. Hence, for example, audio data can be output by the EAOB even while searching (during menu transition) on the menu screen (for example, audio data can be output by Part of Audio #4, #5, and #6 shown in FIG. 6), thus avoiding the silent state while searching (during menu transition) on the menu screen.

Note that, for example, the user can select whether the playback process based on the EAOB is executed while searching (during menu transition).

FIG. 14 is a flowchart showing an example of the playback selection process for selecting whether the playback process is executed based on the EAOB.

For example, when the playback process based on the EAOB is selected via the key input unit 15 (YES in G01), the EAOB is played back on the basis of the EAOB playback information (G02). That is, the audio data which is independent of the video data played back based on the PGC information is played back. Alternatively, when the playback process based on the EVOB is selected (YES in G03), the EVOB is played back based on the PGC information (G04). That is, the audio data is played back in synchronism with the video data.

Although the present invention has been described using a DVD as an example for the realization of the present invention it should be stressed that the present invention is not limited to this kind of information storage medium and that other kinds of information storage media not fulfilling the DVD specification can be used to implement the concept of the present invnetion as well.

## Claims

1. An information playback apparatus **characterized by** comprising:
a reading unit (2) configured to read data from an information storage medium which records video data, first audio data synchronized with the video data, second audio data asynchronized with the video data, first playback information which defines a playback order of predetermined unit data included in the video data, and second playback information for playing back the second audio data in correspondence with sequential playback of the predetermined unit data defined by the first playback information;
a video data playback unit (3, 4, 5, 8, 14) configured to play back the video data based on the first playback information; and
an audio data playback unit (3, 4, 10, 11, 12, 14) configured to select any one of a first playback process for playing back the first audio data in synchronism with playback of the video data, and a second playback process for playing back the second audio data based on the second playback information, and play back any one of the audio data.

2. An apparatus according to claim 1, **characterized in that**
on the basis of playback mode selection information recorded on the information storage medium, the audio data playback unit selects any one of the first playback process and the second playback process, and plays back any one of the audio data.

3. An apparatus according to claim 1, **characterized in that**
the second audio data includes a plurality of audio data parts in which head positions are represented by a plurality of entry points,
the second playback information includes an entry point which designates a playback start position of the second audio data, and an entry point which designates a playback end position, and
the audio data playback unit executes the second playback process by selecting one or a plurality of sequential audio data parts based on the entry point which designates the playback start position, and the entry point which designates the playback end position in the second playback information in correspondence with the sequential playback of the predetermined unit data defined by the first playback information, and repeatedly playing back the selected one or a plurality of sequential audio data parts.

4. An apparatus according to claim 3, **characterized by** further comprising
a guide unit (16) configured to guide the number of audio data parts selected by the audio data playback unit.

5. An apparatus according to claim 3, **characterized by** further comprising
a guide unit (16) configured to guide information about an audio data part which is selected by the audio data playback unit, and currently played back.

6. An apparatus according to claim 3, **characterized by** further comprising
a guide unit (16) configured to guide a position of the current playback audio data part in the plurality of audio data parts by displaying the plurality of audio data parts selected by the audio data playback unit, and specifying and displaying the current playback audio data.

7. An apparatus according to claim 3, which further comprises
an input unit (15) configured to receive a selection input of a predetermined audio data part in the plurality of audio data parts selected by the audio data playback unit,
**characterized in that**, on the basis of the selection input, the audio data playback unit searches the plurality of audio data parts for the predetermined audio data part, and plays back the found predetermined audio data part.

8. An information playback method **characterized by** comprising:
reading out data from an information storage medium which records video data, first audio data synchronized with the video data, second audio data asynchronized with the video data, first playback information which defines a playback order of predetermined unit data included in the video data, and second playback information for playing back the second audio data in correspondence with sequential playback of the predetermined unit data defined by the first playback information;
playing back the video data based on the first playback information; and
selecting any one of a first playback process for playing back the first audio data in synchronism with playback of the video data, and a second playback process for playing back the second audio data based on the second playback information, and playing back any one of the audio data (G01 - G04).

9. A method according to claim 8, **characterized in that**
the second audio data includes a plurality of audio data parts in which head positions are represented by a plurality of entry points,
the second playback information includes an entry point which designates a playback start position of the second audio data, and an entry point which designates a playback end position, and
the second playback process is a process for selecting one or a plurality of sequential audio data parts based on the entry point which designates the playback start position, and the entry point which designates the playback end position in the second playback information in correspondence with the sequential playback of the predetermined unit data defined by the first playback information, and repeatedly playing back the selected one or a plurality of sequential audio data parts.
